# EUROPEAN PATENT APPLICATION

(11) **EP 4 174 654 A1**
(43) Date of publication of application: **03.05.2023**
(21) Application number: 22198714.2
(22) Date of filing: 29.09.2022
(51) Int. Cl.: G06F 9/50, G06N 3/06

(54) **METHOD AND APPARATUS WITH DATA LOADING**

(30) Priority: 01.11.2021 KR 20210148290; 10.03.2022 KR 20220030156
(71) Applicant: Samsung Electronics Co., Ltd., Gyeonggi-do 16677 (KR)
(72) Inventor: Kim, Myeong Woo, Suwon-si, Gyeonggi-do (KR); Kim, Yongdeok, Suwon-si, Gyeonggi-do (KR); Tuvshinjargal, Narankhuu, Suwon-si, Gyeonggi-do (KR); Kim, Gunhee, Suwon-si, Gyeonggi-do (KR); Lee, Seungwon, Suwon-si, Gyeonggi-do (KR); Choi, Changin, Suwon-si, Gyeonggi-do (KR)
(74) Representative: Grünecker Patent- und Rechtsanwälte PartG mbB

(57) **Abstract**

A processor-implemented method with data loading includes: dividing a training data set into a plurality of subsets based on sizes of a plurality of data files included in the training data set; loading, from each of the plurality of subsets, a portion of data files in the subset to a plurality of processors based on a proportion of a number of data files of the plurality of subsets in the subset and a batch size of distributed training; and reallocating, based on sizes of data files loaded to processors in a same group among the plurality of processors, the loaded data files to the processors in the same group.

## Description

### BACKGROUND

### 1. Field

The following description relates to a method and apparatus with data loading.

### 2. Description of Related Art

Training of a deep learning model may include updating a weight parameter of the deep learning model based on training data. The training data may be divided based on a batch size, which is a size of data to be trained at one time, and may be used for training of the deep learning model. Distributed training may include dividing and performing operations for training deep learning models on a plurality of graphics processing units (GPUs). Data parallelism may be a distributed training method that divides and processes training data in a plurality of GPUs, and may include synchronizing results of multiple GPUs. Synchronization may include calculating a final update result by synthesizing update results of multiple GPUs each time that the weight parameter of the deep learning model is updated. Since the synchronization may be performed after batch learning of each GPU is completed, the more uniform the size of data processed during the batch learning in the plurality of GPUs, the less waiting time required for the synchronization.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is claimed in the independent claims. Preferred embodiments are specified in the dependent claims.

In one general aspect, a processor-implemented method with data loading includes: dividing a training data set into a plurality of subsets based on sizes of a plurality of data files included in the training data set; loading, from each of the plurality of subsets, a portion of data files in the subset to a plurality of processors (or a plurality of training processors) based on a proportion of a number of data files of the plurality of subsets in the subset and a batch size of distributed training; and reallocating, based on sizes of data files loaded to processors (or training processors) in a same group among the plurality of processors (or the plurality of training processors), the loaded data files to the processors (or the training processors) in the same group.

The dividing of the training data set into the plurality of subsets may include: dividing a range of a data size corresponding to the training data set into a predetermined number of intervals, each having a predetermined size; and dividing the training data set into subsets corresponding to the divided intervals based on the sizes of the data files, and each of the subsets may include a data file of a size belonging to a corresponding interval.

The dividing of the training data set into the plurality of subsets may include dividing the training data set into a predetermined number of subsets based on a cumulative distribution function (CDF) for the sizes of the data files such that each of the subsets may include a same number of data files.

The reallocating of the loaded data files may include: sorting the data files loaded to the processors of the same group in an order of sizes; and distributing the sorted data files to the processors in the same group in a predetermined order.

The reallocating of the loaded data files may include: sorting the data files loaded to the processors in the same group in an order of sizes; and distributing, to the processors in the same group, a portion of the sorted data files in a first order determined in advance and another portion of the sorted data files in a second order that is a reverse order of the first order.

The distributing in the first order and the distributing in the second order may be repetitively performed within the batch size.

The loading, from each of the plurality of subsets, of the portion of data files in the subset to the plurality of processors may include: determining a number of data files to be extracted from the subset based on the proportion of the number of data files of the plurality of subsets in the subset and the batch size; and arbitrarily extracting the determined number of data files from the subset and loading the extracted data files to the plurality of processors.

The plurality of processors may include a first processor and a second processor, the plurality of subsets may include a first subset, and a number of data files extracted from the first subset among data files loaded to the first processor may be equal to a number of data files extracted from the first subset among data files loaded to the second processor.

A number of the plurality of subsets may be determined based on any one or any combination of any two or more of a number of the plurality of processors, the batch size, and an input of a user.

The same group may include a set of processors in a same server.

The training data set may include either one or both of: natural language text data for training a natural language processing (NLP) model; and speech data for training the NLP model.

The processors may include a graphics processing unit (GPU).

In another general aspect, one or more embodiments include a non-transitory computer-readable storage medium storing instructions that, when executed by one or more processors, configure the one or more processors to perform any one, any combination, or all operations and methods described herein.

In another general aspect, an apparatus with data loading includes: one or more processors configured to: divide a training data set into a plurality of subsets based on sizes of a plurality of data files included in the training data set; load, from each of the plurality of subsets, a portion of data files in the subset to a plurality of training processors based on a proportion of a number of data files of the plurality of subsets in the subset and a batch size of distributed training; and reallocate, based on sizes of data files loaded to training processors in a same group among the plurality of training processors, the loaded data files to the training processors in the same group.

For the dividing of the training data set into the plurality of subsets, the one or more processors may be configured to: divide a range of a data size corresponding to the training data set into a predetermined number of intervals, each having a predetermined size; and divide the training data set into subsets corresponding to the divided intervals based on the sizes of the data files, and each of the subsets may include a data file of a size belonging to a corresponding interval.

For the dividing of the training data set into the plurality of subsets, the one or more processors may be configured to divide the training data set into a predetermined number of subsets based on a cumulative distribution function (CDF) for the sizes of the data files such that each of the subsets may include a same number of data files.

For the reallocating of the loaded data files, the one or more processors may be configured to: sort the data files loaded to the training processors of the same group in an order of sizes; and distribute the sorted data files to the training processors in the same group in a predetermined order.

For the reallocating of the loaded data files, the one or more processors may be configured to: sort the data files loaded to the training processors in the same group in an order of sizes; and distribute, to the training processors in the same group, a portion of the sorted data files in a first order determined in advance and another portion of the sorted data files in a second order that is a reverse order of the first order.

The one or more processors may be configured to repetitively perform the distributing in the first order and the distributing in the second order within the batch size.

For the loading, from each of the plurality of subsets, of the portion of data files in the subset to the plurality of training processors, the one or more processors may be configured to: determine a number of data files to be extracted from the subset based on the proportion of the number of data files of the plurality of subsets in the subset and the batch size; arbitrarily extract the determined number of data files from the subset; and load the extracted data files to the plurality of training processors.

In another general aspect, a processor-implemented method with data loading includes: dividing a training data set into subsets such that each of the subsets corresponds to a distinct range of data sizes of data files in the training data set; loading, from each of the subsets, a portion of data files in the subset to each of processors based on a batch size of distributed training; and reallocating the data files loaded to processors in a same group to the processors in the same group sequentially based on sizes of the loaded data files.

The dividing of the training data set may include dividing the training data set such that each of the subsets may include a same number of the data files.

The reallocating may include reversing, for each subsequent batch of the batch size, a size-based distribution order of the loaded data files to the processors in the same group.

The method may include performing, using the processors of the same group, one or more training operations of a deep learning model based on the reallocated data files.

Other features and aspects will be apparent from the following detailed description, the drawings, and the claims.

### BRIEF DESCRIPTION OF THE DRAWINGS

FIG. 1 is a flowchart illustrating an example of a data loading method for a distributed training system.
FIG. 2 is a diagram illustrating an example of a sequence length-based distribution of data files included in a training data set.
FIGS. 3A and 3B are diagrams illustrating an example in which a training data set is divided into subsets corresponding to an interval of a sequence length of 128.
FIGS. 4A and 4B are diagrams illustrating an example in which a training data set is divided into subsets, each including a same number of data files.
FIGS. 5A and 5B are diagrams illustrating an example of an operation of loading a portion of data files in each subset to a plurality of processors.
FIGS. 6A and 6B are diagrams illustrating an example of an operation of loading a portion of data files in each subset to a plurality of processors.
FIGS. 7A and 7B are diagrams illustrating an example of an operation of reallocating loaded data files.
FIGS. 8A and 8B are diagrams illustrating an example of effects of a data loading method.
FIG. 9 is a block diagram illustrating an example of an apparatus.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known, after an understanding of the disclosure of this application, may be omitted for increased clarity and conciseness.

Although terms, such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in the examples described herein may also be referred to as a second member, component, region, layer, or section without departing from the teachings of the examples.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween. Likewise, similar expressions, for example, "between" and "immediately between," and "adjacent to" and "immediately adjacent to," are also to be construed in the same way. As used herein, the term "and/or" includes any one and any combination of any two or more of the associated listed items.

The terminology used herein is for describing various examples only and is not to be used to limit the disclosure. The articles "a", "an", and "the" are intended to include the plural forms as well, unless the context clearly indicates otherwise. The term "and/or" includes any one and any combination of any two or more of the associated listed items. The terms "comprises," "includes," and "has" specify the presence of stated features, numbers, operations, members, elements, and/or combinations thereof, but do not preclude the presence or addition of one or more other features, numbers, operations, members, elements, and/or combinations thereof. The use of the term "may" herein with respect to an example or embodiment (for example, as to what an example or embodiment may include or implement) means that at least one example or embodiment exists where such a feature is included or implemented, while all examples are not limited thereto.

Unless otherwise defined, all terms including technical or scientific terms used herein have the same meaning as commonly understood by one of ordinary skill in the art to which this disclosure pertains and based on an understanding of the disclosure of the present application. It will be further understood that terms, such as those defined in commonly-used dictionaries, should be interpreted as having a meaning that is consistent with their meaning in the context of the relevant art and the disclosure of the present application, and will not be interpreted in an idealized or overly formal sense unless expressly so defined herein.

Hereinafter, examples will be described in detail with reference to the accompanying drawings. Regarding the reference numerals assigned to the elements in the drawings, it should be noted that the same elements will be designated by the same reference numerals, and redundant descriptions thereof will be omitted.

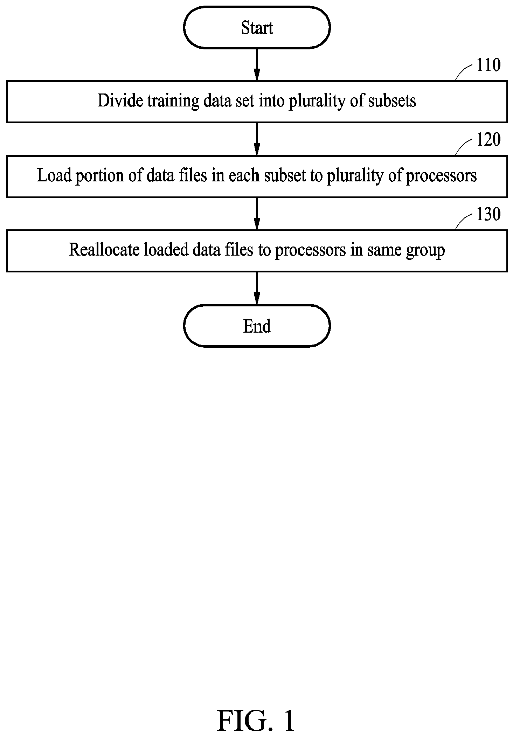

FIG. 1 is a flowchart illustrating an example of a data loading method for a distributed training system.

Referring to FIG. 1, a data loading method for a distributed training system including a plurality of processors may include operation 110 of dividing a training data set into a plurality of subsets, operation 120 of loading a portion of data files in each subset to a plurality of processors, and operation 130 of reallocating the loaded data files to processors in a same group.

The distributed training system may include one or more servers (or nodes) including one or more processors that perform training operations of a deep learning model. A processor of the distributed training system may be an arithmetic processing module that updates a weight parameter of a deep learning model based on training data, and may be or include, for example, a graphics processing unit (GPU).

The training data set may include data files of various sizes for training the deep learning model. For example, when the deep learning model is a natural language processing (NLP) model, the training data set may include natural language text files and/or spoken speech files for training the NLP model.

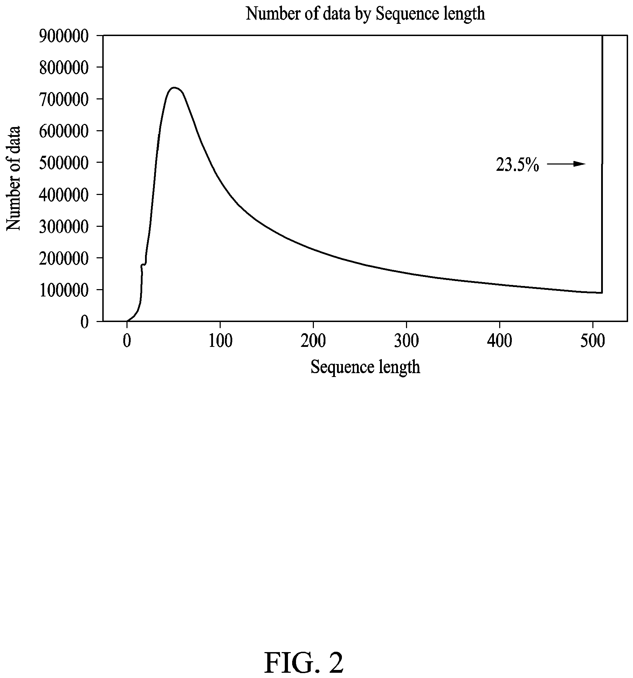

For example, FIG. 2 illustrates a sequence length-based distribution of data files included in a training data set when the training data set includes natural language text files for training an NLP model. Referring to FIG. 2, a number of data files corresponding to each sequence length may vary. For example, when one data file is arbitrarily extracted from a training data set having the distribution of FIG. 2, a probability of extracting a data file corresponding to a sequence length of 512 may be 23.5%.

Operation 110 may include an operation of dividing a training data set into a plurality of subsets based on sizes of a plurality of data files included in the training data set. A subset may be a portion of the training data set, and each data file included in the training data set may be included in one subset corresponding to a size of the data file.

Operation 110 may include an operation of dividing a range of a data size corresponding to the training data set into a predetermined number of intervals, each having a predetermined size, and an operation of dividing the training data set into subsets corresponding to the divided intervals based on the sizes of the data files. Each of the subsets may include a data file of a size belonging to a corresponding interval of the subset. For example, a subset may correspond to a portion obtained by dividing the entire training data set based on size.

The entire training data set may be divided into a predetermined number of subsets. The number (e.g., a total number and/or total quantity) of subsets may be determined based on any one or any combination of any two or more of the number (e.g., a total number and/or total quantity) of the plurality of processors, a batch size, and an input of a user. For example, the number of the plurality of subsets may be determined by the number input by the user. In addition, for example, the number of subsets may be determined to be less than the batch size or determined as a divisor of the batch size. Also, the number of subsets may be determined such that one or more data files are allocated to each of the plurality of processors in each subset.

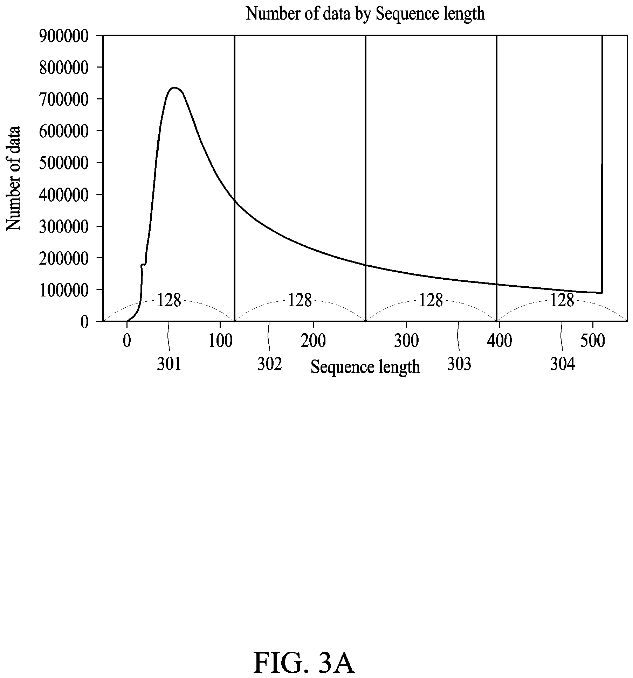

For example, FIG. 3A illustrates a case in which the training data set having the sequence length distribution of FIG. 2 is divided into subsets corresponding to an interval of a sequence length of 128. Referring to FIG. 3A, a range of data sizes between 0 and 512 corresponding to the training data set may be divided into four sections 301, 302, 303, and 304 each of the sequence length of 128. The training data set may be divided into four subsets corresponding to the four sections 301, 302, 303, and 304 based on a sequence length of a data file. For example, among the data files included in the training data set, a data file having a sequence length less than or equal to 128 may be classified to a first subset corresponding to the interval 301, a data file having a sequence length greater than 128 and less than or equal to 256 may be classified to a second subset corresponding to the interval 302, a data file having a sequence length greater than 256 and less than or equal to 384 may be classified to a third subset corresponding to the interval 303, and a data file having a sequence length greater than 384 and less than or equal to 512 may be classified to a fourth subset corresponding to the interval 304.

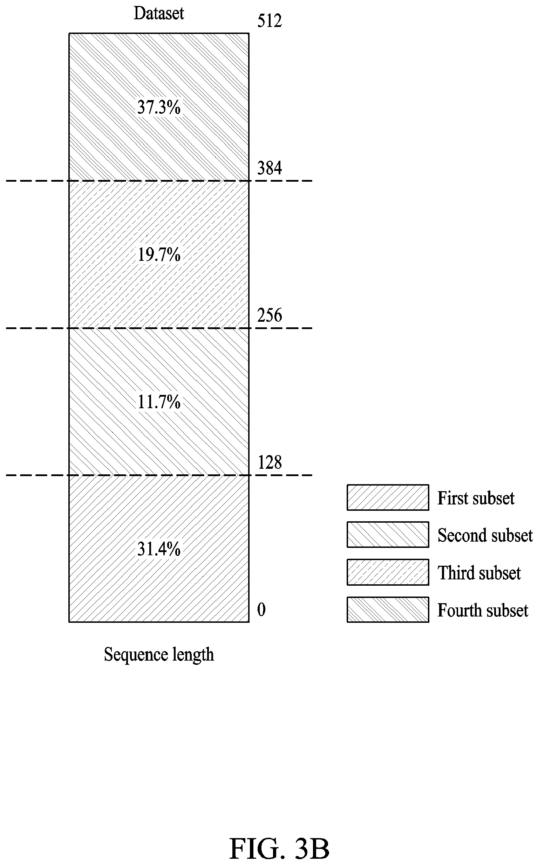

Depending on the sequence length distribution of the data files, the number of data files included in each subset may not be the same. For example, referring to FIG. 3B, the number of data files included in the first subset corresponding to the interval 301 of the sequence length less than or equal to 128 may be 31.4% of the total data files included in the training data set, the number of data files included in the second subset corresponding to the interval 302 of the sequence length greater than 128 and less than or equal to 256 may be 11.7% of the total data files included in the training data set, the number of data files included in the third subset corresponding to the interval 303 of the sequence length greater than 256 and less than or equal to 384 may be 19.7% of the total data files included in the training data set, and the number of data files included in the fourth subset corresponding to the interval 304 of the sequence length greater than 384 and less than or equal to 512 may be 37.3% of the total data files included in the training data set.

Operation 110 may include an operation of dividing the training data set into the predetermined number of subsets based on a cumulative distribution function (CDF) for the sizes of the data files such that each subset includes the same number of data files.

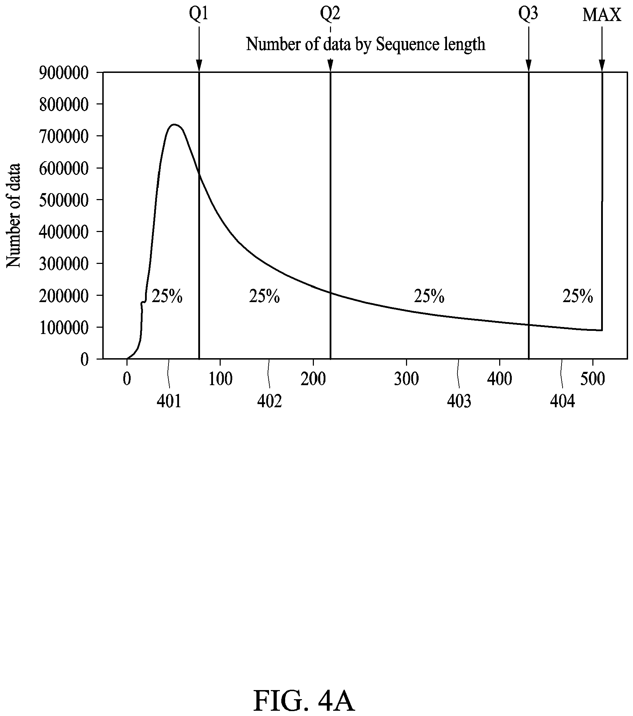

For example, FIG. 4A illustrates a case in which the training data set having the sequence length distribution of FIG. 2 is divided such that each of the four subsets includes the same number of data files, each corresponding to 25% of the total data files included in the training data set. Referring to FIG. 4A, a plurality of data files included in training data may be divided into four subsets according to quartiles Q1, Q2, and Q3 of the sequence length and a MAX value, which is a maximum value of the sequence length of the training data set.

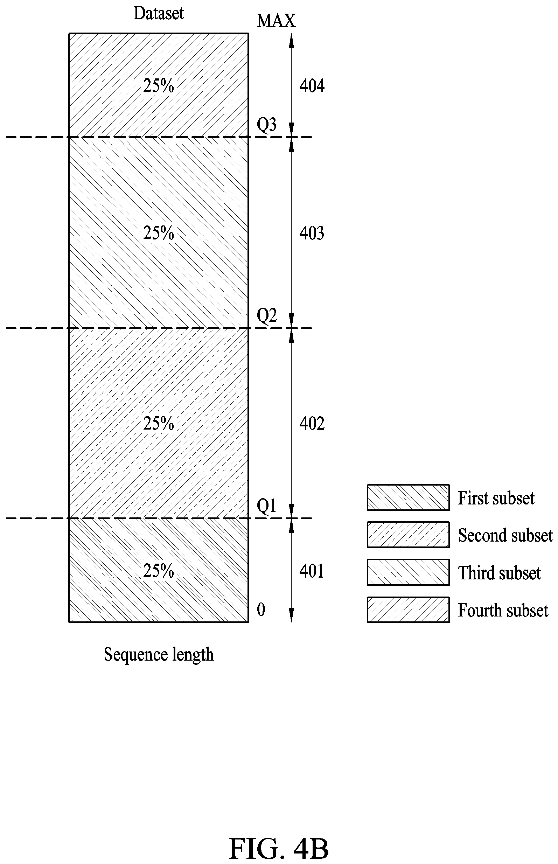

Depending on the sequence length distribution of the data file, lengths of intervals corresponding to subsets may not be the same. For example, referring to FIG. 4B, a value of Q1 which is the length of an interval 401 corresponding to the first subset, a value of Q2-Q1 which is the length of an interval 402 corresponding to the second subset, a value of Q3-Q2 which is the length of an interval 403 corresponding to the third subset, and a value of MAX-Q3 which is the length of an interval 404 corresponding to the fourth subset may not be the same as one another. Meanwhile, the number of data files included in each of the first subset through the fourth subset may be the same.

Operation 120 may include an operation of loading a portion of data files in each subset to the plurality of processors based on a proportion of the number of data files of the plurality of subsets and a batch size of distributed training. The batch size may correspond to a unit of data files to be learned at a time by one processor. For example, when the batch size is 16, 16 data files may be loaded to a processor such that a weight parameter update for training the deep learning model is performed. The batch size may be determined in advance.

Operation 120 may include an operation of determining a number of data files to be extracted from each of the subsets based on the proportion of the number of data files of the plurality of subsets and the batch size, and may include an operation of arbitrarily extracting the determined number of data files from each of the subsets and loading to the plurality of processors. For example, the number of data files included in a predetermined subset among the data files loaded to each of the plurality of processors may be uniform. For example, the plurality of processors may include a first processor and a second processor. In an example, when the plurality of subsets includes the first subset, the number of data files extracted from the first subset among the data files loaded to the first processor may be the same as the number of data files extracted from the first subset extracted from the data files load to the second processor.

The number of data files loaded to each processor from a predetermined subset may be determined based on the batch size and a ratio of the number of data files included in a corresponding subset to the total number of data files included in the training data set. In the batch size, data files of the number corresponding to the ratio of the number of data files included in each subset to the total number of data files included in the training data set may be loaded to each of the plurality of processors.

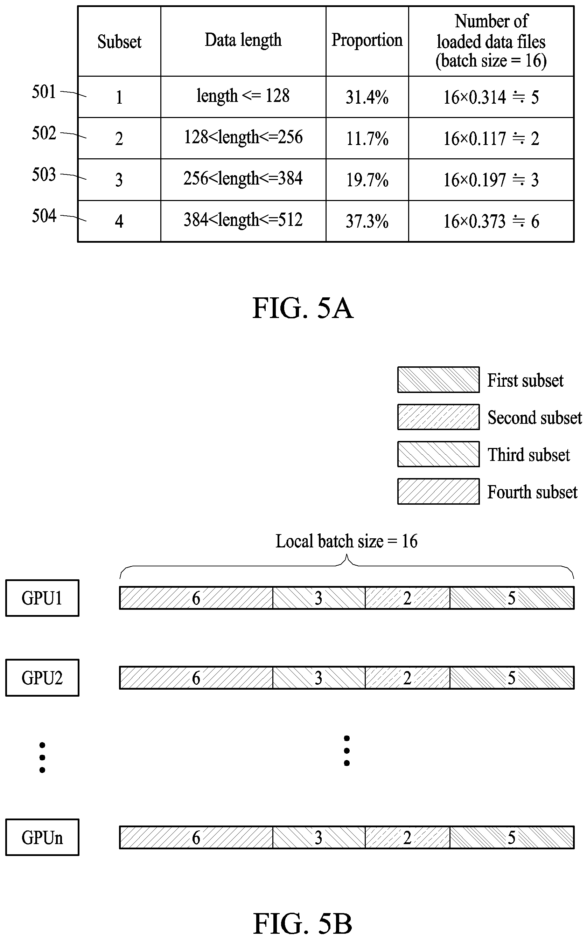

For example, as illustrated in FIG. 3B, the training data set may be divided into the first subset through the fourth subset. In an example, when the batch size of the distributed training is 16, the number of data files to be loaded to one processor in each subset may be determined as shown in FIG. 5A. Referring to FIG. 5A, a first subset 501 may include data files of the number corresponding to 31.4% of the entire training data set, a second subset 502 may include data files of the number corresponding to 11.7% of the entire training data set, a third subset 503 may include data files of the number corresponding to 19.7% of the entire training data set, and a fourth subset 504 may include data files of the number corresponding to 37.3% of the entire training data set. Five data files corresponding to 31.4% of the batch size of 16 may be extracted in the first subset 501, two data files corresponding to 11.7% of the batch size of 16 may be extracted in the second subset, three data files corresponding to 19.7% of the batch size of 16 may be extracted in the third subset, and six data files corresponding to 37.3% of the batch size of 16 may be extracted in the fourth subset, so as to be loaded to the processor. In an example, a number of data files (e.g., 5) extracted from a subset (e.g., the first subset 501) may be, rounded to the nearest integer, the batch size (e.g., 16) multiplied by the proportion of the subset (e.g., 31.4%).

FIG. 5B illustrates a result obtained by loading the predetermined data files extracted from each subset to each of the plurality of processors according to a result of a determination based on the batch size of the distributed training and the proportions of data files of the plurality of subsets shown in FIG. 5A. Referring to FIG. 5B, among data files loaded to each of a plurality of processors including, for example, GPU1, GPU2, GPS3, and GPUn, the number of data files extracted from a predetermined subset may be the same. For example, each of the plurality of processors including GPU1, GPU2, GPS3, and GPUn may include five data files extracted from the first subset, two data files extracted from the second subset, three data files extracted from the third subset, and six data files extracted from the fourth subset.

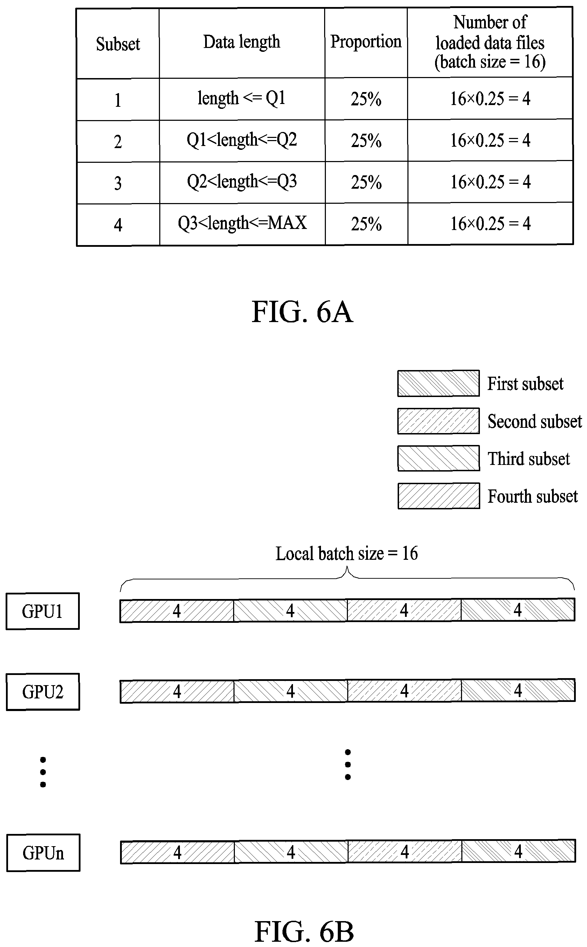

Meanwhile, as illustrated in FIG. 4B, when each subset includes the same number of data files, the same number of data files may be loaded to a processor from each subset. For example, referring to FIG. 6A, four data files may be extracted from each subset and loaded to each processor. Referring to FIG. 6B, four data files extracted from each of the first subset through the fourth subset may be loaded to each processor. In an example, a number of data files (e.g., 4) extracted from a subset may be, rounded to the nearest integer, the batch size (e.g., 16) multiplied by the proportion of the subset (e.g., 25%).

By extracting the same number of data files from a predetermined subset and loading the extracted data files to each processor, the data loading method of one or more embodiments may reduce a deviation in size of data files loaded to each processor when compared to a typical data loading method of arbitrarily extracting data files of the batch size from the entire training data set and loading the extracted data files to each processor.

Operation 130 may include an operation of reallocating, based on sizes of data files loaded to processors in a same group among the plurality of processors, the loaded data files to the processors in the same group. The same group may be a unit of processors with a low communication cost with each other and may include, for example, a set of processors in the same server. The processors of a group may share the size of the allocated data file through communication with other processors of the group, and may exchange the allocated data file with each other. A speed of communication between processors in the same server may be higher than a speed of communication between processors in different servers, and thus communication overhead may be small. By reallocating data files previously allocated to the processors in the same group based on the communication between the processors in the same group with less communication overhead, the data loading method of one or more embodiments may reduce a communication cost compared to a typical data loading method in which reallocation is performed based on communications between all processors.

Operation 130 of reallocating the loaded data files may include an operation of sorting the data files loaded to the processors of the same group in an order of sizes and an operation of distributing the sorted data files to the processors in the same group in a predetermined order.

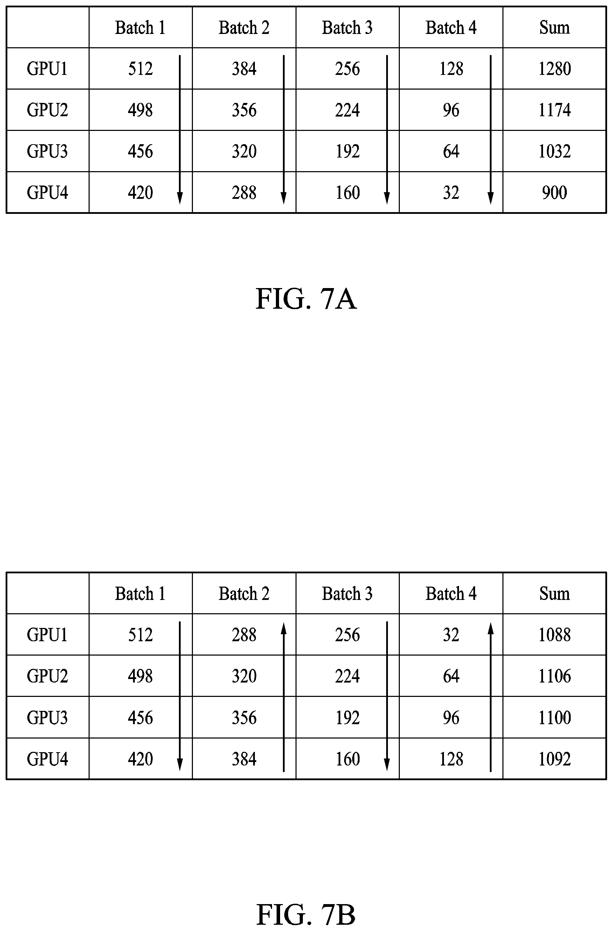

For example, FIG. 7A illustrates sequence lengths of data files sorted in GPU1, GPU2, GPU3, and GPU4 when the batch size of the distributed training is 4. GPU1, GPU2, GPU3, and GPU4 may correspond to processors in the same server. For example, the same server may include GPU1, GPU2, GPU3, and GPU4. Referring to FIG. 7A, 16 data files allocated to four GPUs may be sorted in a descending order based on a size. The data files sorted in the descending order of the size may be distributed to GPUs in the order of GPU1, GPU2, GPU3, and GPU4. For example, a largest data file with a sequence length of 512 may be allocated to GPU1, a second largest data file with a sequence length of 498 may be allocated to GPU2, a third largest data file with a sequence length of 456 may be allocated to GPU3, and a fourth largest data file with a sequence length of 420 may be allocated to GPU4, sequentially. In addition, a next largest data file with a sequence length of 384 may be allocated to GPU1 again. The order among GPU1, GPU2, GPU3 and GPU4 may be arbitrarily determined in advance. The operation of distributing data files to GPUs may be repetitively performed until data files of the batch size are allocated to each processor.

The determined order among the plurality of processors may be changed each time of distribution. Data files of the predetermined number may be distributed in the plurality of processors in a predetermined first order among the plurality of processors, and then data files of the predetermined number may be distributed in the plurality of processors in a second order different from the first order. For example, operation 130 of reallocating the loaded data files may include an operation of sorting the data files loaded to the processors of the same group in the order of sizes and an operation of distributing the sorted data files to the processors in the same group in a predetermined first order and then distributing the sorted data files in a second order that is a reverse order of the first order. The operation of distributing in the first order and distributing in the second order may be repetitively performed within the batch size.

For example, FIG. 7B illustrates sequence lengths of data files sorted in GPU1, GPU2, GPU3, and GPU4 when the batch size of the distributed training is 4. GPU1, GPU2, GPU3, and GPU4 may correspond to processors in the same server. Referring to FIG. 7B, 16 data files allocated to four GPUs may be sorted in descending order based on a size. The data files sorted in the descending order of the size may be distributed to GPUs in the first order of GPU1, GPU2, GPU3, and GPU4, and then distributed to the GPUs in the second order of GPU4, GPU3, GPU2, and GPU1, which is a reverse order of the first order. The operation of alternately distributing data files to GPUs in the first order and the second order may be repetitively performed until the data files of the batch size are allocated to each processor.

Referring to FIGS. 7A and 7B, in the case of FIG. 7A, a data file with a largest size may be allocated to GPU1 in one round of distribution. In contrast, in the case of FIG. 7B, a data file with a largest size may be alternately allocated to GPU1 and GPU4 in one round of distribution. As a result obtained by repetitively performing the distributing operation such that the data files corresponding to the batch size of each processor are reallocated, a deviation of a sum of sizes of the data files reallocated to each GPU is smaller in the case of FIG. 7B compared to the case of FIG. 7A. For example, in the case of FIG. 7B, the sum of the sizes of the data files allocated to each processor is more uniform compared to the case of FIG. 7A.

Operation 130 of reallocating the loaded data files may include an operation of reallocating the loaded data files using various methods for allocating data files of a uniform size to the plurality of processors. For example, data files may be distributed in a way of changing a processor to which a first data file is allocated, each time of distribution that one data file is allocated to each processor in an order of sizes of the data files. Also, for example, for each time of distribution, data files may be distributed in a way of randomly determining an order of processors to which the data files are allocated in the order of sizes.

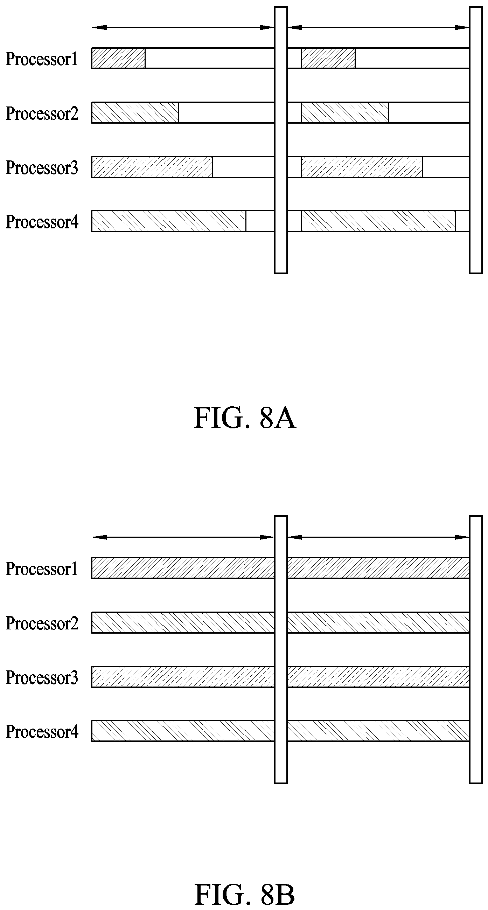

FIGS. 8A and 8B are diagrams illustrating an example of effects of a data loading method.

For example, as a sum of sizes of data files loaded to each processor is more uniform, a period of time in which each processor processes an operation of distributed training may be more uniform. When a sum of sizes of data files loaded to each processor is less uniform, a difference in learning operation processing speed between processors may increase.

For example, FIGS. 8A and 8B illustrate bar graphs representing a size of data allocated to each of processors 1 through 4. In a case of FIG. 8A, a deviation of data allocated to the processors 1 through 4 may be larger when compared to a case of FIG. 8B. As illustrated in FIG. 8A, when the deviation of the data allocated to the processors 1 through 4 is relatively large, a processor (for example, the processor 1) that has processed small-sized training data may wait for other processors (for example, processors 2, 3, and 4) to finish operations, which may lead to an occurrence of sync overhead. Meanwhile, as illustrated in FIG. 8B, when a uniform size of a data file is allocated to each processor, a difference in operation time for processing a data file in each processor may be slight. Thus, by alternately distributing data files to GPUs, the data loading method of one or more embodiments may reduce the sync overhead occurring when a processor waits for other processors to finish operation.

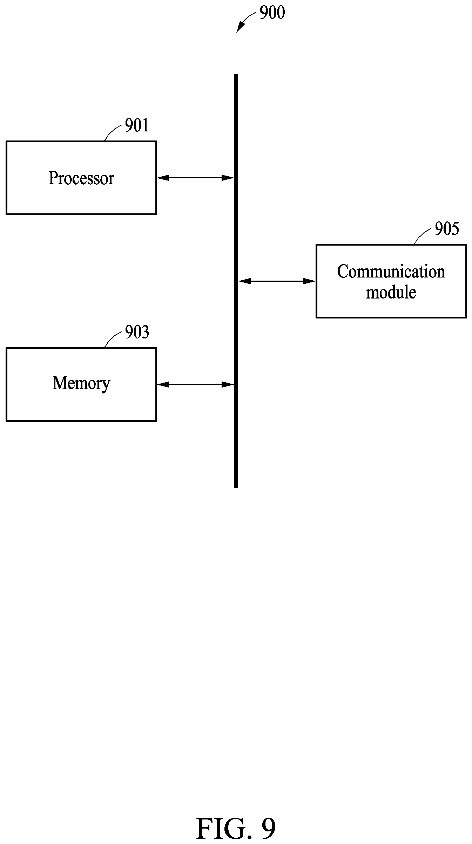

FIG. 9 is a block diagram illustrating an example of an apparatus.

Referring to FIG. 9, an apparatus 900 may include a processor 901 (e.g., one or more processors), a memory 903 (e.g., one or more memories), and a communication module 905. The apparatus 900 may include an apparatus that performs a data loading method for a distributed training system including a plurality of processors as described above with reference to FIGS. 1 through 8B. The plurality of processors may be processors that performs an operation of distributed training and may include, for example, a GPU. To distinguish between the processor performing the operation of distributed training and the processor 901 of the apparatus 900, the processor performing the operation of distributed training may also be referred to as a "training processor" hereinafter.

The processor 901 may perform any one or more or all of the operations and methods described with reference to FIGS. 1 through 8B. For example, the processor 901 may perform one of an operation of dividing a training data set into a plurality of subsets, an operation of loading a portion of data files in each subset to a plurality of training processors, and an operation of reallocating the loaded data files to training processors in a same group.

The memory 903 may be a volatile memory or a non-volatile memory and store data related to the data loading method described with reference to FIGS. 1 through 8B. For example, the memory 903 may store data generated in a process of performing the data loading method or data required to perform the data loading method.

The communication module 905 may provide the apparatus 900 with a function to communicate with another electronic device or another server. For example, the apparatus 900 may be connected to an external device (for example, a terminal of a user, a server, or a network) through the communication module 905 and perform a data exchange. As an example, the apparatus 900 may transmit and receive data to and from one or more servers including one or more training processors for distributed training through the communication module 905. As another example, the apparatus 900 may transmit and receive data to and from a database in which a training data set for distributed training is stored through the communication module 905.

The memory 903 may store a program in which the data loading method described with reference to FIGS. 1 through 8B is embodied. The processor 901 may execute the program stored in the memory 903 and control the apparatus 9000. Code of the program executed by the processor 901 may be stored in the memory 903.

The apparatus 900 may further include other components. As an example, the apparatus 900 may further include an input/output interface including an input device and an output device as a device for interfacing with the communication module 905. As another example, the apparatus 900 may further include other components such as a transceiver, various sensors, and a database.

The apparatuses, processors, memories, communication modules, apparatus 900, processor 901, memory 903, communication module 905, and other apparatuses, units, modules, devices, and components described herein with respect to FIGS. 1-9 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-9 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions in the specification, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

## Claims

1. A processor-implemented method with data loading, the method comprising:
dividing a training data set into a plurality of subsets based on sizes of a plurality of data files included in the training data set;
loading, from each of the plurality of subsets, a portion of data files in the subset to a plurality of processors based on a proportion of a number of data files of the plurality of subsets in the subset and a batch size of distributed training; and
reallocating, based on sizes of data files loaded to processors in a same group among the plurality of processors, the loaded data files to the processors in the same group.

2. The method of claim 1, wherein
the dividing of the training data set into the plurality of subsets comprises:
dividing a range of a data size corresponding to the training data set into a predetermined number of intervals, each having a predetermined size; and
dividing the training data set into subsets corresponding to the divided intervals based on the sizes of the data files, and
each of the subsets comprises a data file of a size belonging to a corresponding interval.

3. The method of claim 1 or 2, wherein the dividing of the training data set into the plurality of subsets comprises dividing the training data set into a predetermined number of subsets based on a cumulative distribution function, CDF, for the sizes of the data files such that each of the subsets comprises a same number of data files.

4. The method of one of claims 1 to 3, wherein the reallocating of the loaded data files comprises:
sorting the data files loaded to the processors of the same group in an order of sizes; and
distributing the sorted data files to the processors in the same group in a predetermined order.

5. The method of one of claims 1 to 4, wherein the reallocating of the loaded data files comprises:
sorting the data files loaded to the processors in the same group in an order of sizes; and
distributing, to the processors in the same group, a portion of the sorted data files in a first order determined in advance and another portion of the sorted data files in a second order that is a reverse order of the first order,
wherein the distributing in the first order and the distributing in the second order is repetitively performed within the batch size.

6. The method of one of claims 1 to 5, wherein the loading, from each of the plurality of subsets, of the portion of data files in the subset to the plurality of processors comprises:
determining a number of data files to be extracted from the subset based on the proportion of the number of data files of the plurality of subsets in the subset and the batch size; and
arbitrarily extracting the determined number of data files from the subset and loading the extracted data files to the plurality of processors.

7. The method of one of claims 1 to 6, wherein
the plurality of processors comprises a first processor and a second processor,
the plurality of subsets comprises a first subset, and
a number of data files extracted from the first subset among data files loaded to the first processor is equal to a number of data files extracted from the first subset among data files loaded to the second processor.

8. The method of one of claims 1 to 7, wherein a number of the plurality of subsets is determined based on any one or any combination of any two or more of a number of the plurality of processors, the batch size, and an input of a user.

9. The method of one of claims 1 to 8, wherein the same group comprises a set of processors in a same server.

10. The method of one of claims 1 to 9, wherein the training data set comprises either one or both of:
natural language text data for training a natural language processing, NLP, model; and
speech data for training the NLP model.

11. The method of one of claims 1 to 10, wherein the processors comprise a graphics processing unit, GPU.

12. The method of one of claims 1 to 11, further comprising performing, using the processors of the same group, one or more training operations of a deep learning model based on the reallocated data files.

13. A non-transitory computer-readable storage medium storing instructions that, when executed by one or more processors, configure the one or more processors to perform the method of one of claims 1 to 12.

14. An apparatus with data loading, the apparatus comprising:
one or more processors configured to:
divide a training data set into a plurality of subsets based on sizes of a plurality of data files included in the training data set;
load, from each of the plurality of subsets, a portion of data files in the subset to a plurality of training processors based on a proportion of a number of data files of the plurality of subsets in the subset and a batch size of distributed training; and
reallocate, based on sizes of data files loaded to training processors in a same group among the plurality of training processors, the loaded data files to the training processors in the same group.

15. The apparatus of claim 14 adapted to perform the method of one of claims 1 to 12.
